# EUROPÄISCHE PATENTSCHRIFT

(11) **EP 2 362 171 B1**
(45) Veröffentlichungstag und Bekanntmachung des Hinweises auf die Patenterteilung: **10.10.2018**
(21) Anmeldenummer: 11401022.6
(22) Anmeldetag: 17.02.2011
(51) Int. Cl.: F26B 3/06, F26B 21/14, F26B 23/00

(54) **Verfahren zur Trocknung feuchter, biomassehaltiger Substanzen**
Method of drying wet substances containing biomass
Procédé de séchage de substances humides et contenant de la biomasse

(30) Priorität: 18.02.2010 DE 102010002134
(43) Veröffentlichungstag der Anmeldung: 31.08.2011
(73) Patentinhaber: Kiener, Christoph, 81369 München (DE)
(72) Erfinder: Kiener, Christoph, Dr., 81369, München (DE); Bertau, Martin, 09627, Bobritzsch (DE); Pätzold, Carsten, 02994, Wiednitz (DE)
(74) Vertreter: Steiniger, Carmen

(56) Entgegenhaltungen:
- EP-A2- 0 190 106
- US-A- 2 376 095
- US-A- 3 031 381
- US-A- 4 561 194
- US-A- 4 732 597
- KUDRA T ET AL: "GASEOUS CARBON DIOXIDE AS THE HEAT AND MASS TRANSFER MEDIUM IN DRYING", DRYING TECHNOLOGY, TAYLOR & FRANCIS, PHILADELPHIA, PA, US, Bd. 25, Nr. 1, 1. Januar 2007 (2007-01-01) , Seiten 327-334, XP001540201, ISSN: 0737-3937, DOI: 10.1080/07373930601119912

## Beschreibung

Die Erfindung betrifft die Trocknung von feuchten, biomassehaltigen Substanzen. Die Erfindung lässt sich prinzipiell in jedem industriellen Prozess, der biomassehaltige Substanzen verwendet und in dem diese getrocknet werden müssen, anwenden.

Oft ist der Wassergehalt von biomassehaltigen Substanzen sehr hoch. Um diese Substanzen über längere Zeiträume zu lagern und schließlich in bestimmten technischen Anwendungen einsetzen zu können, muss dieser Wassergehalt reduziert werden.

Nach Stand der Technik wird Biomasse durch überhitzten Dampf, heiße Luft oder Mischungen dieser Medien getrocknet, mit dem Nachteil des zusätzlichen Verbrauchs von externer Energie in der Größenordnung von 12 bis 15 % des Gesamtenergiedurchsatzes der Anlage, bezogen auf den Energiegehalt der Biomasse. Die Trocknung über Lagerung wie z.B. bei der Herstellung von Brettern hat den Nachteil einer langen Lagerzeit und damit verbunden eines hohen Platzbedarfs über längere Zeit sowie die Abhängigkeit von der Witterung und die Gefahr des Faulens durch Auftreten von biologischen Prozessen wie Mikrobenbefall und Brandgefahr durch Wärmentwicklung aus mikrobiellen Abbauprozessen.

In Trocknungsanlagen werden häufig mit fossilen Energieträgern befeuerte Brenner als Energielieferanten eingesetzt. Schweröl oder Erdgas werden häufig in Verbindung mit Trommeltrocknern verwendet, sodass beispielsweise Holzspäne in einer fast nur aus überhitztem Wasserdampf und wenig Rauchgas bestehenden Atmosphäre bei 300 bis 500°C getrocknet werden, wie dies bei der Herstellung von Spanplatten der Fall ist.

Oft wird das Material im Anschluss an die Trocknung weiter gelagert.

In DE 10 2004 042 285 A1 wird eine Methode zur Trocknung und anschließenden Lagerung von Biomasse offengelegt. Hauptmerkmal dieser Offenlegungsschrift ist eine Vorrichtung zum Trocknen, die eine Miete mit Be- und Entlüftungsvorrichtung darstellt, sodass das Trocknungsgas durch die Biomasse geführt wird, und anschließendem gas- und feuchtigkeitsfreiem Lagern.

In DE 695 30 009 T2 ist ein Kreislauf aus Brenngas oder Inertgas beschrieben. Dieses wird in einer Verbrennungsturbine zusammen mit dem Produktgas erwärmt und zum Trocknen des Ausgangsmaterials verwendet und heizt dieses gleichzeitig auf. Das nach Trocknung nasse Brenngas/Inertgas dient darauf in der Verbrennungsturbine als Wasserquelle (wird benötigt zur Reduzierung der Flammtemperatur und/oder zur Reduktion von NOₓ-Emission) und wird erneut erwärmt. So entsteht ein sequentieller Aufbau, da das Trocknungsgas rezykliert wird.

DE 10 2007 015 089 A1 beschreibt die Verwendung von industrieller Abwärme, die bei der Zementklinkerproduktion anfällt, zum Erwärmen der zu trocknenden Biomasse. Dazu wird der noch warme Zementklinker bevorzugt direkt mit der Biomasse in Kontakt gebracht. Alternativ erfolgt die Wärmeübertragung über einen Wärmetauscher.

DE 03758276 T1 beschreibt die Trocknung von z.B. Klärschlamm durch Sonnenenergie.

Die Trocknung nach konventionellen Methoden erfordert oftmals den Einsatz hochwertiger Energieträger zur Verdampfung des Wassers, sodass dieser bisherige Einsatz prozessintensivierter Trocknungsmethoden in Zukunft durch die Preisentwicklung für Energieträger und CO₂-Einsparungsziele ungünstiger beurteilt werden wird.

Der Artikel von T. Kudra und M. Poirier "Gaseous Carbon Dioxide as the Heat and Mass Transfer Medium in Drying", Drying Technology, Taylor & Francis, Philadelphia, PA, US, Bd. 25, Nr. 1, 1. Januar 2007, Seiten 327 bis 334, beinhaltet ein Laborverfahren zum Bestimmen von Trocknungsraten. Dabei kommt CO₂ in einem geschlossenen Kreislauf zum Einsatz, um Weizenkörner, die in einer Trocknungskammer aufbewahrt werden, zu trocknen. Hierzu wird eine Gasflasche mit technischem CO₂ mit einem CO₂-Gehalt von 99,8 % verwendet.

Die Druckschrift EP 0 190 106 A2 offenbart eine mobile Trocknungsvorrichtung zum Trocknen von Getreide sowie ein Verfahren zur Trocknung gemäß dem Oberbegriff von Patentanspruch 1. Zum Trocknen wird ein heißes Gasgemisch aus angesaugter Luft und Abgas eines Brenners verwendet. Dieses Gasgemisch wird in ein Silo geleitet, in welchem das zu trocknende Getreide vorgesehen ist. Das Getreide kann innerhalb des Silos mithilfe einer Förderschnecke von unten nach oben bewegt werden. Das Silo weist perforierte Wände auf, sodass das feuchtigkeitsangereicherte Trocknungsgasgemisch durch die Perforation nach außen entweichen kann.

Aus der Druckschrift US 4,561,194 ist eine Lagerhalle zum Trocknen von Heu bekannt. Die Lagerhalle weist einen Boden und ein Dach, aber keine Seitenwände auf. Über die Fläche der Lagerhalle verteilt sind aufrechte Säulen innerhalb der Lagerhalle vorgesehen, durch welche einerseits erwärmte Luft zum Trocknen in das Heu eingeleitet und andererseits feuchtigkeitsangereicherte Luft aus dem Heu nach außen abgeleitet werden kann. Zum Trocknen werden nur leicht erhöhte Temperaturen verwendet. Es wird auch davon abgeraten, Umgebungsluft aus der Nähe von Industrieanlagen oder Kraftwerken bei dem vorgeschlagenen Verfahren einzusetzen.

In der Druckschrift US 4,732,597 ist ein Verfahren zum Trennen von Gasgemischen, wie Luft, zur Erzeugung von Sauerstoff mittlerer Reinheit beschrieben. Bei dem Verfahren wird ein Gasprodukt mit 60 bis 80 % Sauerstoff und als Nebenprodukt Stickstoff erzeugt. Der Stickstoff kann Verunreinigungen in Form von Kohlendioxid und Wasser enthalten und nach entsprechender Reinigung und bei geringem Feuchtigkeitsgehalt erhitzt und dann als Trocknungsmedium zur Kohletrocknung in der Stahlindustrie und zur Kohleverbrennung in Kraftwerken verwendet werden.

In der Druckschrift US 2,376,095 A ist die Verwendung eines Luft mit zusätzlichem Kohlendioxid enthaltenden Gases zum Trocknen oder Entfeuchten von Lebensmittelprodukten beschrieben. Die Lebensmittelprodukte werden dabei in dem Gas aufbewahrt und/oder von dem Gas im Kreislauf unter zusätzlicher Verwendung eines dehydrierenden Mittels, wie Silicagel, durchströmt.

Ziel der Erfindung ist daher ein möglichst einfaches Trocknungsverfahren, welches den Einsatz von hochwertiger Fremdenergie reduziert. Das Verfahren soll kostensparend Flüssigkeitsanteile, im speziellen Wasser, in biomassehaltigen Substanzen bei möglichst geringem technischen Aufwand vermindern, die Verbrennung von Energieträgern vermeiden und die Menge des für Trocknungsprozesse zusätzlich zu erzeugenden CO₂ reduzieren.

Erfindungsgemäß wird die Aufgabe gelöst durch ein Verfahren zur Trocknung von feuchten, biomassehaltigen Substanzen, bei dem ein Gasgemisch als Trocknungsgas mit der zu trocknenden biomassehaltigen Substanz (nachfolgend Trocknungsgut) in Kontakt gebracht wird, wobei das Trocknungsgut in Form einer zur Atmosphäre hin offenen Halde oder in einem zur Atmosphäre hin offenen Silo gelagert wird, und das Trocknungsgas so in die Halde oder das Silo eingespeist wird, dass es das Trocknungsgut auf dem Weg in die Atmosphäre durchflutet, wobei das einströmende Trocknungsgas CO₂ und N₂ enthält und einen O₂-Anteil von maximal 20,5 Vol.-%, bezogen auf das wasserfrei gerechnete Trocknungsgas, aufweist, wobei das Trocknungsgas einen CO₂-Gehalt von mindestens 0,5 Vol.-% aufweist, das verwendete Trocknungsgas und/oder die ihm zugemischten Bestandteile einen Wassergehalt von weniger als 2 g H₂O/m³ (im Normzustand) oder von weniger als 0,2 g H₂O/m³ (im Normzustand) aufweisen.

Dabei wird das Trocknungsgut in Form einer zur Atmosphäre hin offenen Halde oder in einem zur Atmosphäre hin offenen Silo gelagert und das Trocknungsgas so in die Halde oder das Silo eingespeist, dass es das Trocknungsgut auf dem Weg in die Atmosphäre durchflutet bzw. durchströmt. Dies hat den Vorteil, dass das Trocknungsgut auf einfache Weise gelagert werden kann, ohne dass man spezielle Lagerbehälter mit aufwändigen Durchströmungsmechanismen benötigt. Erfindungsgemäß reicht es aus, wenn das Trocknungsgut in Form eines einzigen Postens gelagert ist. Da die Halde oder das Silo zur Atmosphäre hin offen ist, kann das in die Halde oder das Silo eingebrachte Trocknungsgas nach seinem Durchströmen des Trocknungsgutes einfach in die Atmosphäre abgeleitet werden.

Charakteristisch an dem erfindungsgemäßen Verfahren ist es, dass das einströmende Trocknungsgas CO₂ und N₂ enthält und einen O₂-Anteil von maximal 20,5 Vol.-%, bezogen auf das wasserfrei gerechnete Trocknungsgas, aufweist. Durch den Stickstoff- und Kohlendioxidanteil des Trocknungsgases kann eine optimale Trocknung des Trocknungsgutes zur Verfügung gestellt werden. Dabei sorgt das Kohlendioxid neben der Trocknung auch dafür, dass in dem Trocknungsgut saure Bedingungen erzeugt werden, wodurch Fäulnis vermindert, idealerweise sogar vermieden wird.

Ferner ist das erfindungsgemäße Verfahren ist dadurch gekennzeichnet, dass das Trocknungsgas eine veränderte Zusammensetzung gegenüber Luft (die durchschnittliche Sauerstoffkonzentration von trockener Luft beträgt 20,942 Vol.-%) aufweist und sich insbesondere durch eine geringere Sauerstoffkonzentration von maximal 20,5 Vol.-% (bezogen auf das wasserfrei gerechnete Trocknungsgas) als Luft auszeichnet. Das Trocknungsgas weist vorzugsweise einen O₂-Anteil von maximal 15 Vol.-%, bevorzugt maximal 10 Vol.-%, besonders bevorzugt maximal 5 Vol.-%, insbesondere maximal 2 Vol.-%, jeweils bezogen auf das wasserfrei gerechnete Trocknungsgas, auf.

Durch den im Vergleich zu Luft verringerten Sauerstoffgehalt wird bei dem Trocknungsgut die Brandgefahr herabgesetzt.

Unter Trocknung wird im Sinne der Erfindung der Entzug von Flüssigkeiten (insbesondere Wasser) aus dem Trocknungsgut (einem Stoff oder Gegenstand) verstanden. Dementsprechend sind feuchte biomassehaltige Substanzen Stoffe oder Gegenstände, die Biomasse und Flüssigkeiten, insbesondere Wasser, enthalten. Durch das erfindungsgemäße Verfahren können dem Trocknungsgut Wasser oder auch andere Flüssigkeiten entzogen werden. Das erfindungsgemäße Verfahren eignet sich insbesondere zum Entzug von Wasser und anderen polaren Flüssigkeiten, wie Alkoholen, Formamiden, Sulfoxiden, Aldehyden, Ketonen, Lactonen, Nitrilen, Sulfonen, Kohlensäureester, Carbonsäuren, Aminen und Ethern.

In vielen Prozessanlagen, die biomassehaltige Substanzen verarbeiten, fallen meist O₂-arme, CO₂- oder N₂-haltige technische Gase sowie Niedertemperaturwärme an. Ein Beispiel dafür sind Anlagen zur Vergasung oder Verbrennung von Festbrennstoffen. Wird reiner Sauerstoff oder sauerstoffangereicherte Luft im Prozess eingesetzt, so fällt zwangsläufig in großen Mengen Stickstoff N₂ an, welcher bisher meist ungenutzt in die Atmosphäre abgeblasen wird.

Es ist daher erfindungsgemäß besonders bevorzugt, wenn das Trocknungsgas und/oder mindestens ein Bestandteil des Trocknungsgases als Nebenprodukt, Koppelprodukt oder Endprodukt verfahrenstechnischer Prozesse zur Produktion oder Reinigung oder Verarbeitung technischer Gase oder von Gemischen technischer Gase anfällt.

Das verwendete Trocknungsgas und/oder die ihm zugemischten Bestandteile weisen einen Wassergehalt von weniger als 2 g H₂O/m³ (im Normzustand) und bevorzugt von weniger als 0,2 g H₂O/m³ (im Normzustand) auf.

Die verwendeten Prozessabgase oder Prozessrestgase können mit Luft gemischt werden und gegebenenfalls auch erwärmt werden. Es ist erfindungsgemäß jedoch nicht notwendig, dass den schon trocken vorliegenden Prozessrestgasen oder Prozessabgasen, bevor sie durch das Trocknungsgut geleitet werden, aufwändig Wasser entzogen wird.

Vergasungsanlagen liefern häufig reines Kohlendioxid (CO₂) als Nebenprodukt, welches ggf. zur Carbon Capture and Sequestration (CCS) aufbereitet wird oder auch aus derartigen Quellen als Reingas zur Verfügung steht. Einen Teil des Gases kann man für die beschriebenen Zwecke einsetzen.

Vorteilhaft können diese oben genannten (oder andere) bisher meist ungenutzten Prozessabgase bzw. Prozessrestgase als Trocknungsgas verwendet werden. Diese können aus einem verfahrenstechnisch völlig unabhängigen Prozess stammen oder verfahrenstechnisch mit dem Prozess in Verbindung stehen, in dem die getrocknete biomassehaltige Substanz verwendet wird. Ein Beispiel für einen solchen in Verbindung stehenden Prozess ist die anschließende Verbrennung der biomassehaltigen Substanz oder auch deren Umsetzung zu Synthesegas, wobei neben Synthesegas CO₂ anfällt. Das bei der Verbrennung oder Umsetzung anfallende CO₂-haltige Gas kann vorteilhaft als Trocknungsgas eingesetzt oder dem Trocknungsgas beigemischt werden. Abgase aus stöchiometrisch betriebenen Feuerungsanlagen haben einen Restsauerstoffgehalt von < 2 Vol.-%. Wird Wasser auskondensiert, so enthält das Gas nur noch CO₂ und N₂ und kann vorteilhaft in der Erfindung als Trocknungsgas eingesetzt werden.

Weiter bevorzugt werden in der Erfindung Prozessrestgase aus der Herstellung technischer Gase verwendet, die bei der Luftzerlegung anfallen (bevorzugt trockener Stickstoff aus einer kryogenen Luftzerlegungsanlage), oder Prozessabgase bzw. Prozessrestgase, die bei der Gasreinigung anfallen. Diese Gase fallen als Nebenprodukte, Koppelprodukte oder Endprodukte an. Vorzugsweise handelt es sich bei dem Trocknungsgas um vorhandene Restgase aus Industrieanlagen, bevorzugt z. B. um CO₂ aus Sauergaswäschen auf Basis von Solventien wie Aminen, Polyethern oder Alkoholen, besonders bevorzugt z. B. trockenes CO₂ aus kalter Rectisol-Wäsche, oder trockene, mit Restgasen vermischte und dadurch CO₂-abgereicherte Luft aus dem Luftstrang nach den Trocknungseinrichtungen einer kryogenen Luftzerlegungsanlage. Insbesondere für den Einsatz in Kombination mit Vergasungsanlagen zur Herstellung von Synthesegas aus feuchten Abfällen (Biomüll, Klärschlamm, Hausmüll, Hausmüll-Trockenstabilisat, Altholzabfälle oder andere Biomasse) mit nachgeschalteter Sauergaswäsche ist das erfindungsgemäße Verfahren interessant. Stickstoff aus Luftzerlegungsanlagen und CO₂ aus Sauergaswäschen sind nahezu wasserfrei und können große Mengen Flüssigkeit aufnehmen. Das anfallende Restgas kann auch durch weitere Prozessschritte aufgereinigt werden, beispielsweise durch Verfahren zur Verbrennung von Fremdbestandteilen (katalytische Oxidation), durch Verflüssigung und Abstrippen von Fremdbestandteilen, durch Verflüssigung und Rektifikation, durch Reinigungsprozesse an Adorbentien oder Absorbentien.

Das erfindungsgemäße Verfahren eignet sich insbesondere auch zur Anwendung bei der Herstellung von Holzpellets oder anderen Bioenergieprodukten, insbesondere an Standorten mit Luftzerlegungsanlagen, z. B. bei Stahlwerken oder in anderen Industrieparks.

Einsatzgebiet der Erfindung ist auch die Trocknung von biomassehaltigen Substanzen, welche zur Zufeuerung bei IGCC (Integrated Gasification Combined Cycle) - und Oxyfuel-Kraftwerken verwendet werden. Bei diesen Verbrennungsprozessen fallen immer genug Stickstoff und CO₂ an, welche vorteilhaft für die Trocknung eingesetzt werden können.

Der Flüssigkeitsgehalt des Trocknungsguts vor der Trocknung beträgt 0,1 bis 99 Gewichtsprozent, vorzugsweise 15 bis 80 Gewichtsprozent, bevorzugt sind Wassergehalte im Bereich 30 bis 65 Gewichtsprozent (Wasseranteil in Gesamtmasse). Nach der Trocknung beträgt der Wassergehalt (bzw. der Flüssigkeitsgehalt) des Trocknungsguts bevorzugt unter 20 Gewichtsprozent, besonders bevorzugt bis 10 Gewichtsprozent.

Eine weitere Anwendung der Erfindung ist die Vorbehandlung von Biomasse für die nachfolgende Herstellung von sogenannter "torrefizierter Biomasse", wie z. B. torrefiziertem Holz (Torrefied Wood auch Röst-/Dörr-Holz). Durch die Reduktion des Wassergehalts im erfindungsgemäßen Trocknungsverfahren wird anschließend der Torrefizierungsprozess (milde, anaerobe Pyrolyse bei i. d. R. 230 bis 300°C, Reduktion des Wassergehalts auf unter 3 Gewichtsprozent) beschleunigt und in diesem Energie eingespart.

Das Trocknungsgas besteht bevorzugt zu mindestens 85 Vol.-%, bevorzugt 95 Vol.-% aus CO₂, N₂ und/oder Edelgasen (He, Ar, Ne, Kr und/oder Xe).

Durch den geringen Sauerstoffgehalt (maximal 20,5 Vol.-%, vorzugsweise maximal 15 Vol.-%, bevorzugt unter 10 Vol.-%, besonders bevorzugt unter 5 Vol.-%) wirkt das Trocknungsgas vorteilhaft brandhemmend und unterdrückt das Wachstum von aeroben Mikroorganismen. Vorteilhaft wird auch das Eindringen von höheren aerob lebenden Organismen, wie Nagetieren, Insekten und anderen Schädlingen verhindert. Diese Wirkung wird vorteilhaft ohne Bakterizide, Fungizide oder chemische Schädlingsbekämpfungsmittel, wie z. B. Rodentizide und Insektizide, erreicht. Vorteilhaft verbleiben dadurch in der getrockneten biomassehaltigen Substanz keine schädlichen Chemikalien zurück.

Das Einstellen saurer Bedingungen in der biomassehaltigen Substanz erfolgt im einfachsten Fall durch den CO₂-Gehalt des Trocknungsgases, dazu enthält das Trocknungsgas bevorzugt mindestens 2 Vol.-% CO₂, besonders bevorzugt mindestens 5 Vol.-% CO₂.

Alternativ erfolgt das Einstellen saurer Bedingungen im Trocknungsgut durch Zugabe einer flüchtigen Säure zum Trocknungsgas oder Ansäuern des Trocknungsguts. Zur Ansäuerung des Trocknungsgases eignen sich prinzipiell alle flüchtigen Säuren. Unter flüchtigen Säuren werden anorganische oder organische Säuren verstanden, welche zumindest bei der Trocknungstemperatur, bevorzugt jedoch auch bei Raumtemperatur (25°C ± 10°C), mit dem Trocknungsgas gemischt werden können, auch wenn ihr Siedepunkt deutlich über der Trocknungstemperatur liegt. Zum Ansäuern des Trocknungsguts können auch nichtflüchtige Säuren zur Anwendung kommen.

Bevorzugt sind die flüchtigen Säuren Ameisensäure, Essigsäure, Propionsäure und HCl. Bevorzugt enthält das Trocknungsgas 2 Vol.-% an flüchtigen Säuren, besonders bevorzugt mindestens 5 Vol.-%. Schwefelhaltige Säuren sind weniger bevorzugt.

Durch das Einstellen saurer Bedingungen (pH-Wert kleiner als pH 7), bevorzugt kleiner als pH 6, besonders pH 3 bis 5,5 im Trocknungsgut wird vorteilhaft eine mikrobiozide, zumindest aber eine mikrobiostatische Wirkung beobachtet, die insbesondere auf Bakterien, aber auch auf Pilze wirkt.

Besonders bevorzugt ist die Verwendung eines CO₂-haltigen Gases als Trocknungsgas. Vorteilhaft ist CO₂ in Verbindung mit Wasser (oder anderen protischen Flüssigkeiten) eine Säure, die nicht mehr oxidiert werden kann, wodurch keine biologische Spezies von CO₂ allein leben kann. Gleichzeitig verhindert CO₂ auch die Brandgefahr des Materials, gleiches gilt für N₂ oder O₂-abgereicherte Luft. Besonders überraschend ist jedoch, dass der CO₂-Gehalt nicht nur zu einer Fäulnis- und Brandhemmung, sondern auch zu einer schnelleren Trocknung führt.

Das Trocknungsgas besitzt eine Zusammensetzung, die sich neben der Verminderung des Flüssigkeitsgehalts, insbesondere des Wassergehaltes, günstig auf die biomassehaltige Substanz auswirkt. Im Speziellen besteht dieser günstige Einfluss aus der Verhinderung oder Verlangsamung von mikrobiellen Zerfallsprozessen wie etwa Faulen, das Verhindern des Eindringens von aerob lebenden Spezies oder aus der erstickenden Wirkung auf Brandherde. Dieser Effekt wird im Wesentlichen durch die Kombination geringer Sauerstoffgehalte und saurer Bedingungen erreicht.

Das Trocknungsgut fällt vorteilhaft nach der Trocknung als Feststoff an, ohne dass eine biologische Zersetzung in nennenswertem Umfang stattgefunden hat.

Als Biomasse werden Substanzen biologischer, belebter Herkunft, d. h. alle biogenen Substanzen, also Substanzen biologischen oder organischen Ursprungs bezeichnet. Basis für die Bildung von Biomasse ist die vor allem von Pflanzen betriebene Photosynthese, bei der Sonnenenergie absorbiert und in Form von Biomasse gespeichert wird. Zur Biomasse werden sowohl lebende Pflanzen, als auch die von ihnen abgeleitete organische Substanz, Tiere, Pilze und Mikroorganismen, als auch tote organische Substanz wie Totholz, Laub, Stroh und anderes gezählt.

Der Begriff biomassehaltige Substanz umfasst auch teilweise oder mäßig inkohlte Biomasse, wie Braunkohle und Torf oder anderweitig (teilweise) umgesetzte Biomasse, wie fermentierte oder vergorene Biomasse, insbesondere Fermentations- oder Gärrückstände und Kompost. Des Weiteren umfasst der Begriff auch weitgehend aus Biomasse hergestellte Produkte, wie Kleidung und Stoffe, die zumindest teilweise aus Naturfasern bestehen, Filz, Wolle, Papier, Leder, Holz, jeweils bearbeitet oder unbearbeitet. Die mit der Erfindung getrocknete Biomasse kann auch anorganische Substanzen, wie Sedimente, Salze, Metalle oder andere nicht-biogene Stoffe enthalten. Der Begriff umfasst daher auch Klärschlamm und Hausmüll, insbesondere auch Hausmüll-Trockenstabilisat und Restmüll (letzterer enthält häufig über 40 % biogene Abfälle).

Das erfindungsgemäß verwendete Trocknungsgas eignet sich auch zur Trocknung von Getreide, Fleisch, Obst, Gemüse und anderen Nahrungsmitteln.

Vorteilhaft erübrigt sich in der Erfindung die Zugabe von Antioxidantien oder anderen Methoden der Konservierung (wie z. B. die Zugabe von Sorbinsäure, Benzoesäure, Ascorbinsäure, Nitrit, "Schwefeln" mit SO₂ (i.e. Sulfit)).

Bevorzugt handelt es sich bei der Biomasse um Brennmaterial, Futter- oder Nahrungsmittel, Extraktionsgut oder als schutzwürdig oder in weiteren Prozessschritten eingesetztes Material (z. B. Bücher, Leder).

Zur Trocknung von säureempfindlichen Materialien wird bevorzugt ein CO₂-haltiges Gas als Trocknungsgas eingesetzt.

Das zur Trocknung verwendete Trocknungsgut liegt bevorzugt zerkleinert, bevorzugt in Form von Granulat, Hackschnitzeln, Spänen, Grünschnitt, Presskuchen, Schreddermaterial oder ähnlichem vor.

Grundsätzlich kann das Trocknungsgas an einem oder auch an mehreren Einspeisepunkten oder -abschnitten in das Trocknungsgut eingebracht werden. Dabei ist es besonders von Vorteil, wenn das Trocknungsgas an mehreren Einspeisepunkten oder -abschnitten jeweils mit unterschiedlicher Temperatur und/oder jeweils unterschiedlichem Volumenstrom in das Trocknungsgut eingebracht wird. Hierdurch kann die Trocknung gezielt beeinflusst werden, um ein optimales Trocknungsergebnis zu erreichen.

Das Trocknungsgas hat bevorzugt eine Temperatur von 0°C bis 300°C, bevorzugt über 20°C und bevorzugt unter 130°C, besonders bevorzugt unter 80°C. Vorteilhaft kann Trocknungsgas mit Umgebungstemperatur oder auch Raumtemperatur verwendet werden oder wird mit Niedertemperaturwärme wie z. B. industrieller Abwärme oder Niederdruckdampf, vorzugsweise durch Wärmetauscher, erwärmt. Die oben genannten Prozessrestgase bzw. Prozessabgase weisen in der Regel bereits eine Temperatur auf, welche sich für die Trocknung eignet, und können vorteilhaft direkt zur Trocknung eingesetzt werden. Bevorzugt werden durch eine prozesstechnische Verschaltung die als Trocknungsgas verwendeten Gase mit Überschusswärme aufgeheizt und dadurch gleichzeitig eine Kühlwirkung erzielt. So wird beispielsweise in Luftzerlegungsanlagen die durch Kompression in den einzelnen Verdichtungsstufen eines Luftverdichters erwärmte Luft von etwa 80°C durch Kühlwasser auf etwa 30°C rückgekühlt. Die thermische Energie der Luft wird hier bevorzugt gegen ausströmenden Stickstoff zumindest teilweise ausgetauscht, wodurch der Stickstoff erhitzt und gleichzeitig weniger Kühlwasser benötigt wird. Der so erhitzte Stickstoff kann vorteilhaft (bevorzugt nach Beimischung von CO₂ oder einer flüchtigen Säure) in der Erfindung als Trocknungsgas eingesetzt werden. Ähnlich aufgebaut sind die meisten Verdichtungsprozesse in der Technik, beispielsweise in Kälteanlagen oder in ein- oder mehrstufigen Prozessgasverdichtern, in denen vor einer Zwischenkühlung das Trocknungsgas erwärmt werden kann.

Bevorzugt wird somit zur Trocknung Prozessabwärme genutzt, d. h. es erfolgt keine gesonderte Umwandlung von Energieträgern zur Wärmeerzeugung für den Trocknungsprozess, es wird vielmehr Wärme genutzt, die ansonsten ungenutzt in die Umgebung abgeführt würde.

Insbesondere durch die Vermeidung der Oxidation und die niedrigen Temperaturen wird durch das erfindungsgemäße Verfahren eine besonders schonende Trocknung ohne Zersetzung des Trocknungsguts erreicht.

Das Trocknungsgas wird bevorzugt direkt (ohne Wärmeaustauscher) über oder durch das Trocknungsgut geleitet. Das Trocknungsgut wird während der Durchströmung bevorzugt gelagert oder in einer Trocknungseinheit bewegt. Vorzugsweise wird das Trocknungsgas durch eine Schüttung gelagerten Trocknungsgutes geleitet.

Die Trocknung von im Prozess bewegtem Trocknungsgut erfolgt entweder im Gleichstrom mit wesentlich höherer Geschwindigkeit des Trocknungsgases oder im Gegenstrom oder im Kreuzstrom. Die Trocknung erfolgt dabei bevorzugt in durchströmten Haufwerken, beströmten Silos oder Sprühtrocknungsanlagen.

Bevorzugt erfolgt die Trocknung während der Lagerung des Trocknungsguts. In einer bevorzugten Ausführungsform erfolgt die Trocknung in einer zur Atmosphäre hin offenen, trapezförmig aufgeschütteten Halde von stückigem Trocknungsgut. Dazu wird im Inneren der Halde bevorzugt durch ein perforiertes Rohrleitungssystem das Trocknungsgas auf die Weise eingespeist, dass es die Schüttung auf dem Wege in die Atmosphäre durchströmt. So wird die Halde von dem Gas durchflutet und die Luft verdrängt. Je nach Temperatur, Zusammensetzung (Wärmekapazität, Wasserdampftragfähigkeit) und Strömungsgeschwindigkeit des Gases in der Schüttung nimmt dieses unterschiedliche Mengen an Feuchtigkeit aus dem Trocknungsgut auf. Wird das Trocknungsgut aus dem durchströmten Teil der Halde entnommen, so hat dieses einen wesentlich geringeren Flüssigkeitsgehalt als das frisch auf die Halde geschüttete Trocknungsgut. Ferner ist eine Feuergefahr unterbunden, da Luftsauerstoff aus der Schüttung verdrängt wird.

Vorteilhaft kann in der Erfindung Trocknung und Lagerung kombiniert werden. Das erfindungsgemäße Trocknungsverfahren kann während der gesamten Lagerung angewandt werden. Eine gesonderte Lagerung (entkoppelt von der erfindungsgemäßen Trocknung) ist nicht notwendig.

Entscheidend für den Trocknungsprozess des Trocknungsguts sind die Tragfähigkeit des Gases für Wasserdampf (bei der jeweiligen Temperatur des Gases abhängig vom Taupunkt und der relativen Feuchtigkeit des Gases bei dieser Temperatur) sowie der Eintrag von Energie, die zur Verdampfung der Flüssigkeit (insbesondere des Wassers) benötigt wird. Aus thermodynamischen Überlegungen ist die Verdampfungsenergie die limitierende Größe. Zugeführtes, erwärmtes Gas kühlt bei der Aufnahme von Flüssigkeiten (insbesondere Wasserdampf) aus dem Trocknungsgut durch die Verdunstungskälte des Wassers (bzw. der Flüssigkeit) ab. Dadurch sinkt die Tragfähigkeit für Wasserdampf (bzw. der Flüssigkeit) rasch ab (Taupunktsunterschreitung), was zur Kondensation der Flüssigkeit auf dem Trocknungsgut führen kann ("Schwitzen" des Trocknungsguts). Bevorzugt wird dies durch eine stufenweise Einspeisung von Trocknungsgas in das Trocknungsgut unterbunden. Das schrittweise Nachspeisen von zusätzlichem erwärmten Trocknungsgas durch zusätzliche Einspeisepunkte in den bereits wassergesättigten Strom des Trocknungsgases bringt dabei den Vorteil, dass die Wassersättigung danach wieder unterschritten ist und die Temperatur des Trocknungsgases erhöht wird.

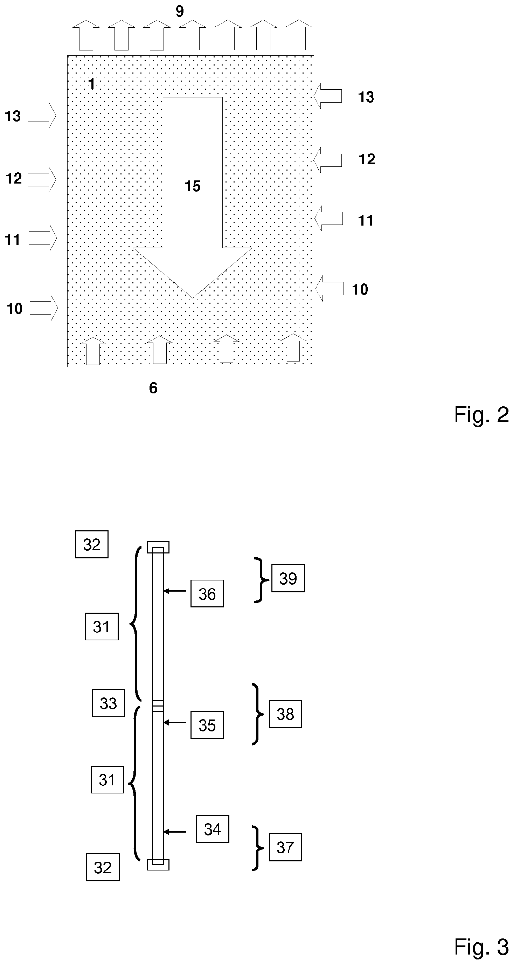

In einer bevorzugten Anordnung wird Trocknungsgas unterschiedlicher Zusammensetzung und/oder Temperatur in mehreren Ebenen und/oder mehreren Einspeisepunkten oder-abschnitten durch das Trocknungsgut geleitet. Eine derartige Anordnung wird beispielhaft in Fig. 2 erläutert. Bevorzugt wird dabei die Temperatur des zur Einspeisung verwendeten Trocknungsgases mit der Strömungsrichtung des Trocknungsgases (bevorzugt von Einspeisepunkt zu Einspeisepunkt) erhöht. Bevorzugt wird die Temperatur des zugeführten Trocknungsgases von unten nach oben erhöht, vorzugsweise so, dass die Temperatur von Ebene zu Ebene bzw. von Einspeisepunkt zu Einspeisepunkt zunimmt. Bevorzugt wird in der untersten Ebene ein Trocknungsgas zugeführt, welches mindestens 2 Vol.-% CO₂ enthält. Die Zusammensetzung, der Volumenstrom und die Temperatur des Trocknungsgases können an den verschiedenen Einspeisepunkten variieren.

Bei der Verwendung eines wie oben definierten Trocknungsgases zur Trocknung von biomassehaltigen Substanzen (ebenfalls wie oben definiert) wird ein Gas mit einem O₂-Anteil, der geringer als Luft ist (maximal 20,5 Vol.-%, bevorzugt maximal 15 Vol.-%, besonders bevorzugt maximal 10 Vol.-%, insbesondere besonders bevorzugt maximal 5 Vol.-% O₂), verwendet, welches mindestens 0,5 Vol.-% CO₂, bevorzugt mindestens 2 Vol.-% CO₂, besonders bevorzugt mindestens 5 Vol.-% CO₂ enthält. Alternativ (oder auch zusätzlich zu dem CO₂-Gehalt) wird das Trocknungsgas mit flüchtigen Säuren angesäuert. Diese Säuren sind bevorzugt wie oben definiert ausgewählt.

Vorteilhaft führt das verwendete Trocknungsgas, insbesondere das CO₂-haltige Gas, zu einer wesentlich schnelleren Trocknung als bei der Verwendung von Luft als Trocknungsgas. Vorzugsweise werden durch CO₂-haltiges Trocknungsgas 20 % rascher die gleichen Trocknungsergebnisse erreicht als bei Trocknung mit Luft, bevorzugt 30 % rascher, besonders bevorzugt über 40 % schneller und insbesondere bevorzugt über 50 % rascher als bei Trocknung mit Luft. Durch den Einsatz einer wie oben beschriebenen Anordnung mit einer Trocknungsgaseinspeisung an mehreren Einspeisepunkten oder -abschnitten in Strömungsrichtung wird der Effekt noch verstärkt.

Vorteilhaft hemmt das erfindungsgemäß verwendete Trocknungsgas nicht nur das Keimwachstum. Es verhindert auch eine Biofilmbildung (häufig schleimiger Konsistenz) und reduziert so das Wasserrückhaltevermögen des Trocknungsguts. Dadurch geht der Trocknungsprozess vorteilhaft schneller vonstatten, als wenn nur Luft verwendet wird. Diese synergistische Wirkung bringt einen erheblichen wirtschaftlichen Vorteil.

Die Erfindung wird nachfolgend durch Abbildungen, Ausführungsbeispiele und Vergleichsversuche erläutert, ohne dass die Erfindung dadurch eingeschränkt wird:

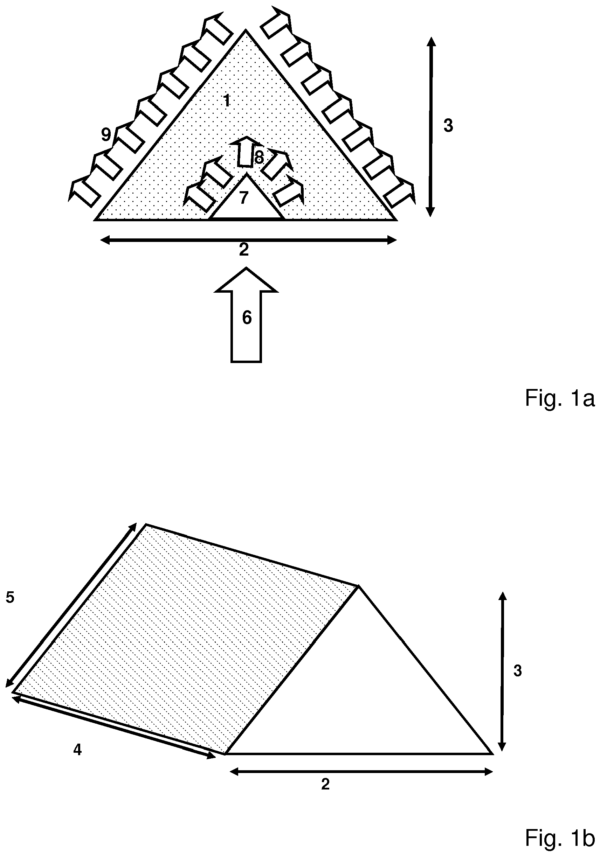

**Fig. 1a und 1b** zeigen ein Schema einer beströmten, geschütteten prismenförmigen Halde 1 der Breite 2 und Höhe 3, der Länge 4 und der Prismenkantenlänge 5, die mit einem Gesamtstrom von Trocknungsgas 6 von innen nach außen beströmt wird. Eine Gasverteileinheit 7 verteilt den Gasstrom 6 auf Unterströme 8, die die Halde 1 durchströmen und über die Oberfläche der Halde 1 als sehr langsamer Gasstrom 9 wieder ausströmen. **Fig. 1b** zeigt die 3D-Darstellung der Halde 1, **Fig. 1a** den Querschnitt durch die Halde 1.
**Fig. 2** zeigt das Schema eines beströmten Silos 1 in Gegenstromführung des Biomassestromes 15 mit mehreren Einspeisepunkten für Trocknungsgas 10, 11, 12, 13, an denen jeweils Trocknungsgas unterschiedlichen Volumenstromes, unterschiedlicher Temperatur und unterschiedlicher Zusammensetzung eingespeist werden kann, das am oberen Ende das Silo als feuchtigkeitshaltiger Gesamtstrom 9 verlässt.
   2009 wurden an der Technischen Universität Bergakademie Freiberg Laborexperimente mit frischen Biomassehäckseln durchgeführt, die die günstige Wirkung von durchströmendem Gas und CO₂ bestätigen.
**Fig. 3** zeigt das Schema der dabei verwendeten Apparatur. Im Inneren von verbundenen Kunststoffrohren 31, die durch eine Muffe 33 verbunden und durch Abschlusskappen 32 verschlossen sind, befindet sich eine Schüttung von Biomasse. Das Gesamtrohr wird thermisch isoliert, um Wärmeaustausch mit der Umgebung zu reduzieren. Zur Beobachtung des Temperaturverlaufs während des Experiments sind an den Positionen 34, 35, 36 drei Temperatursensoren eingebracht. Die Beströmungsrichtung mit Gas erfolgt von unten nach oben durch die ruhende Biomasseschüttung. Nach Beendigung des Experimentes werden Proben der Biomasse aus drei verschiedenen Bereichen 37, 38, 39 (unten, Mitte, oben) entnommen.

In den Versuchen wurden unterschiedliche Zusammensetzungen des Trocknungsgases und Volumenströme des Trocknungsgases getestet. Als Biomasse wurde frisch gehacktes Waldrestholz verwendet, das zu etwa 80 Gew.-% aus Nadelgehölz und etwa 20 Gew.-% Laubgehölz bestand. Der Wassergehalt der eingesetzten Frischsubstanz lag bei 45 Gew.-%. In 3 getrennten und mittels Isolierwolle thermisch isolierten Säulen von 400 cm Höhe und 12,5 cm Innendurchmesser wurden gleiche Mengen der Frischsubstanz über einen Zeitraum von 23 Tagen unter 3 verschiedenen Lagerungsbedingungen gehalten:
a) Lagerung ohne Beströmung (Vergleichsversuch);
b) mit Beströmung durch Kompressordruckluft (Vergleichsversuch);
c) mit Beströmung durch mit CO₂ vermischte Kompressorluft (Ausführungsbeispiel)

Die Beströmung mit Trocknungsgas erfolgte jeweils von unten nach oben (s. Fig. 1). Im Falle a) wurde das Rohrsystem bis auf eine kleine Austrittsöffnung (zum Druckausgleich) verschlossen.

Während des Versuches wurde der Temperaturverlauf innerhalb der Biomasse in einer Höhe von 50 cm, 180 cm und 350 cm gemessen.

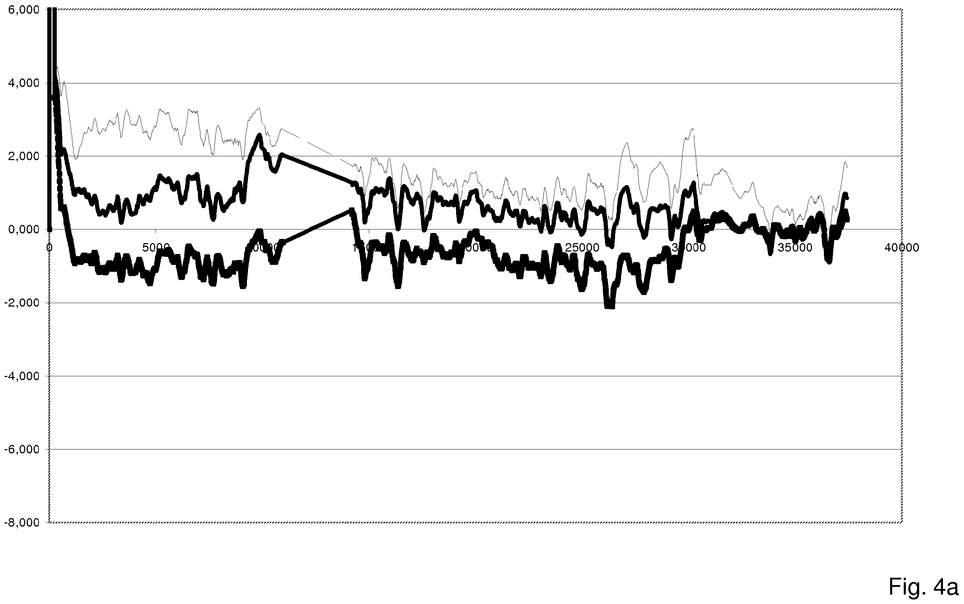

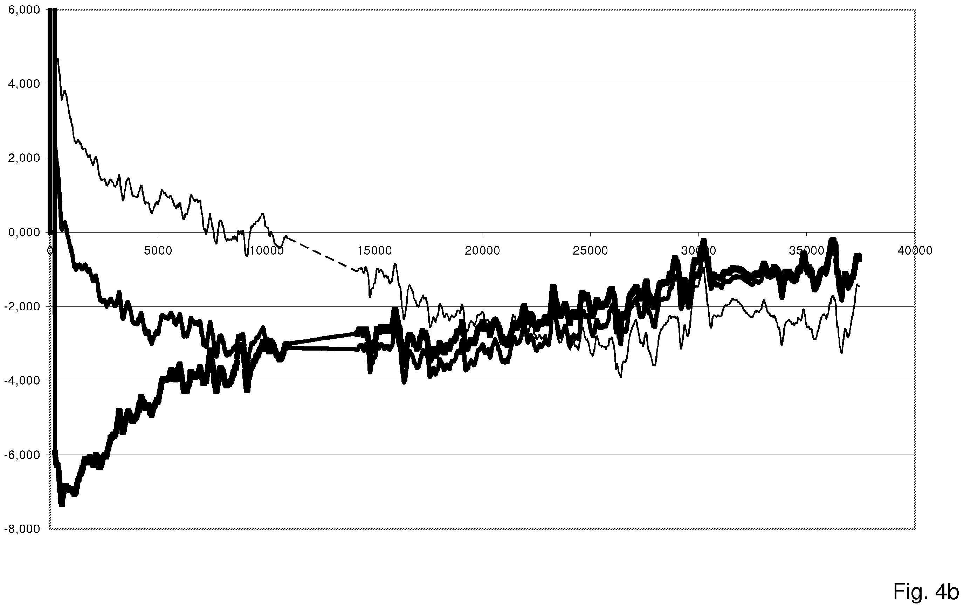

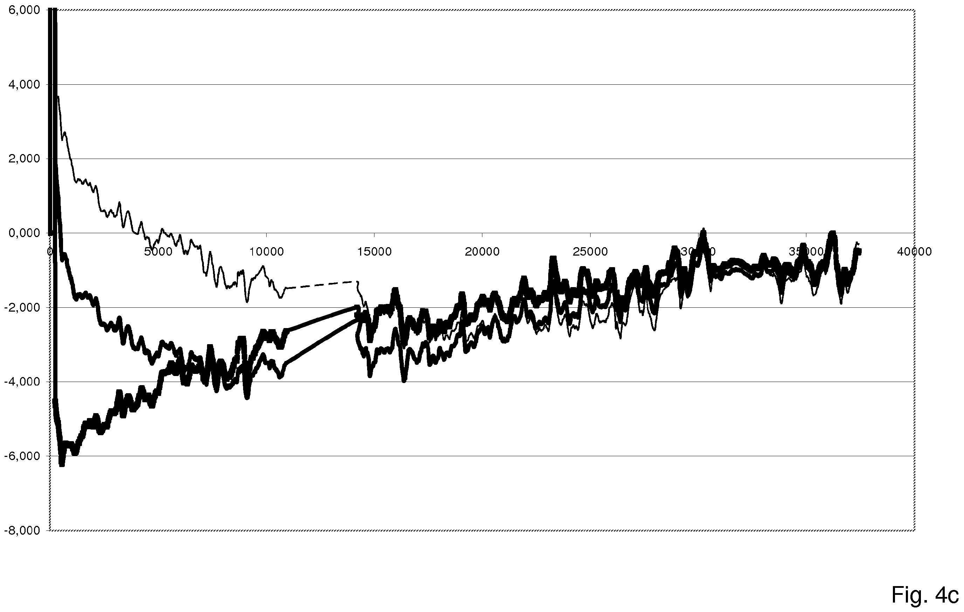

**Fig. 4a****,** **4b** **und** **4c** zeigen den Temperaturverlauf (y-Achse, °C) relativ zur Raumtemperatur während der Trocknungszeit (x-Achse, Minuten) für die unterschiedlichen Höhen der Schüttung (Linie dicke Strichstärke - Messung in 50 cm Höhe; Linie mittlere Strichstärke - Messung in 180 cm Höhe; Linie dünne Strichstärke - Messung in 350 cm Höhe) und die drei Versuchsbedingungen undurchströmt (**Fig. 4a**), Luft-durchströmt (**Fig. 4b**) und CO₂+Luft-durchströmt (**Fig. 4c**). Bedingt durch Tag- und Nachtwechsel entstanden Temperaturveränderungen im Raum, die als Oszillation erkennbar sind. Im Zeitraum zwischen ca. 11.000 und 14.000 Minuten wurden durch eine Störung am Messgerät keine Daten aufgezeichnet.

Man erkennt im unbeströmten Fall (**Fig. 4a**) eine Erhöhung der Temperatur bedingt durch mikrobielle Aktivität um etwa 3°C gegenüber der Raumtemperatur, die über die Trocknungszeit abklingt. In den durchströmten Fällen (**Fig. 4b**) und (**Fig. 4c**) ist zu erkennen, wie die Zone der maximalen Verdunstungskälte durch die Schüttung von unten nach oben wandert. Im Falle der Durchströmung mit CO₂-haltigem Gas geschieht das rascher, als wenn nur Luft durch die Schüttung strömt. Die Trocknung setzt in 3,5 m Höhe bei der Durchströmung mit CO₂ auch wesentlich rascher ein als ohne CO₂. Die verstrichene Zeit bis zur maximalen Verdunstungskälte für die mittlere und obere Zone kann als Indikator für die Trocknungsgeschwindigkeit herangezogen werden.

Nach Beendigung der Versuche wurden für jeden Versuch jeweils Proben im unteren, mittleren und oberen Bereich der Schüttung auf Restwassergehalt, Erscheinungsbild und mikrobiologische Kontamination untersucht.

Die Versuchsbedingungen und Ergebnisse werden in nachfolgender Tabelle 1 zusammengefasst:

**Tabelle 1**

| | Zusammensetzung Trocknungsgas; Hauptkomponenten [Vol.-%] | Temperatur (absolut) | Volumenstrom Trocknungsgas (Norm-Liter/h) | Trocknungszeit (max. Verdunstungskälte) | Restwassergehalt [Gew.-%] nach 23 Tagen | Erscheinungsbild |
|---|---|---|---|---|---|---|
| a) | - (unbeströmte Schüttung) | 25°C, Temperaturanstieg durch mikrobiologische Aktivität um bis zu 3°C | 0 | unendlich | 45 % 46 % 43 % | beginnende Verrottung, Geruch wie feuchter Waldboden, teilweise Geruch nach Essig; stärkste Zersetzung und Pilzbefall an Blattmaterial, Myzelbildung. |
| b) | 78,084 % N₂, 20,942 % O₂, 0,934 % Ar | 25°C Temperaturabsenkung durch Verdunstungskälte um 3 bis 7°C | 270 | 100 % (265 h bzw. 441 h bis zur maximalen Verdunstungskälte) | 6,6 % 8,9 % 14,6 % | Trockenes Material, leichter Geruch nach Waldboden; Blätter und Nadeln sind trocken, aber bräunlich (Oxidation) |
| c) | 62,2 % N₂, 16,7 % O₂, 0,7 % Ar, 20,4 % CO₂ | 25°C Temperaturabsenkung durch Verdunstungskälte um 2 bis 6°C | 270 | 50-70 % (133 h bzw. 300 h bis zur maximalen Verdunstungskälte) | 5,8 % 11,3 % 14,0 % | Geruchsfrei trocken, Blätter und Nadeln sind vollkommen trocken, aber grün wie frisches Material (keine Oxidation) |

Sofern drei Werte angegeben sind, bezeichnet der erste Wert die Messung im untersten Bereich der Schüttung, der zweite in der Mitte und der dritte Wert die Messung im oberen Bereich der Schüttung.

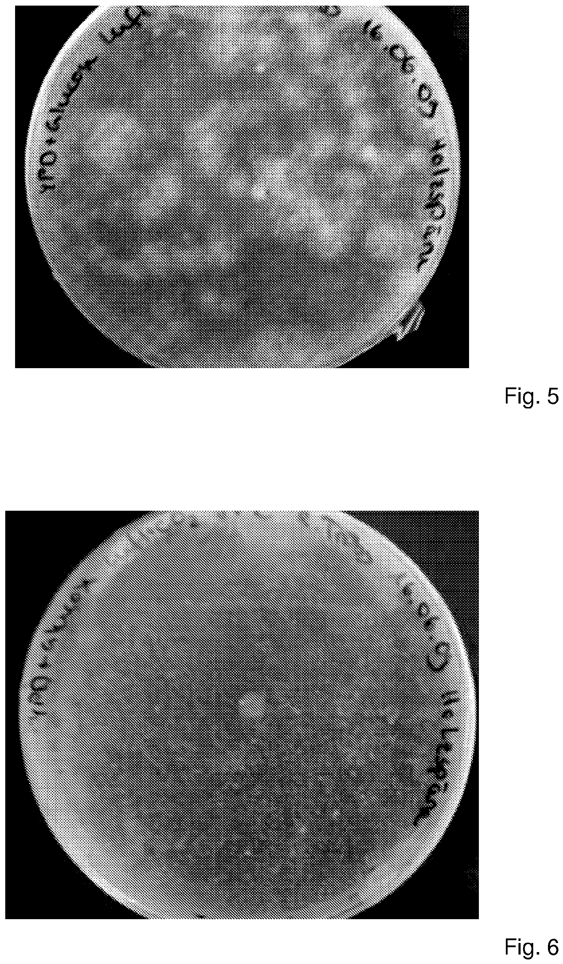

**Fig. 5** und **Fig. 6** zeigen Fotos von Agarplatten, auf die Proben aus dem nach Versuch b (Luft - **Fig. 5**) und c (Luft + CO₂ - **Fig. 6**) getrockneten Material aufgetragen wurden.

Für die Agarplatten wurde ein unspezifischer Nährboden (0,3 g Hefeextrakt, 0,5 g Pepton, 1 g Glucose pro 100 ml Aqua dest.) ausgewählt, um Informationen darüber zu gewinnen, welche verschiedene Mikroorganismen wachsen, und ob durch die CO₂-Einspeisung eine Keimzahlreduktion erreicht werden kann.

Aus dem nach Versuch b und c getrockneten Material wurden 5 g Holzstückchen entnommen und in einem 50 ml Spitzkolben mit 25 ml destilliertem Wasser geschüttelt (Vortexer, 1.000 UpM), um den Übergang der Mikroorganismen vom Holz ins Wasser zu erreichen. Jeweils 50 µl der erhaltenen Suspension wurden auf eine Agarplatte ausgestrichen.

Tabelle 2 fasst die Ereignisse zusammen.

**Tabelle 2**

| | Anzahl Kolonien | Eigenschaften Kolonien | Foto |
|---|---|---|---|
| b) | Platte komplett bewachsen, Anzahl Kolonien unzählbar; Pilz Wachstum | verschiedene Kolonien: | Fig.5 |
| | | 1. rund, gelblich | |
| | | 2. filamentös, konvex mit Ausstülpungen, weiß/gelblich | |
| | | 3. am Rand gelb/orange Kolonien | |
| c) | viele kleine Kolonien; kein Pilzwachstum | gelblich, rund, glatt, zum Teil wellig | Fig.6 |

In der Erfindungsbeschreibung und den Abbildungen werden folgende Bezugszeichen verwendet:
- 1: Schüttung (z. B. Halde oder Säule)
- 2: Breite der Schüttung
- 3: Höhe der Schüttung
- 4: Länge der Schüttung,
- 5: Prismenkantenlänge
- 6: Trocknungsgas (eingespeister Gasstrom)
- 7: Gasverteileinheit 7 verteilt den Gasstrom 6 auf
- 8: Unterströme des Trocknungsgases
- 9: ausströmender (feuchtigkeitshaltiger) Gasstrom
- 10, 11, 12, 13: Einspeisepunkte für Trocknungsgas
- 15: Biomassestrom
- 31: Kunststoffrohr
- 32: Abschlusskappen
- 33: Muffe
- 34, 35, 36: Positionen der Temperatursensoren
- 37,38,39: Bereiche der Probenentnahme

## Patentansprüche

1. Verfahren zur Trocknung von biomassehaltigen Substanzen, bei dem ein Gasgemisch als Trocknungsgas mit den feuchten, biomassehaltigen Substanzen als Trocknungsgut in Kontakt gebracht wird, wobei das Trocknungsgut in Form einer zur Atmosphäre hin offenen Halde oder in einem zur Atmosphäre hin offenen Silo gelagert wird,
und das Trocknungsgas so in die Halde oder das Silo eingespeist wird, dass es das Trocknungsgut auf dem Weg in die Atmosphäre durchflutet,
wobei das einströmende Trocknungsgas CO₂ und N₂ enthält und einen O₂-Anteil von maximal 20,5 Vol.-%, bezogen auf das wasserfrei gerechnete Trocknungsgas, aufweist, wobei das Trocknungsgas einen CO₂-Gehalt von mindestens 0,5 Vol.-% aufweist, **dadurch gekennzeichnet, dass**
das verwendete Trocknungsgas und/oder die ihm zugemischten Bestandteile einen Wassergehalt von weniger als 2 g H₂O/m³ (im Normzustand) oder von weniger als 0,2 g H₂O/m³ (im Normzustand) aufweisen.

2. Verfahren nach Anspruch 1, **dadurch gekennzeichnet, dass** das Trocknungsgas oder mindestens ein Bestandteil des Trocknungsgases als Nebenprodukt, Koppelprodukt oder Endprodukt verfahrenstechnischer Prozesse zur Produktion oder Reinigung oder Verarbeitung technischer Gase oder von Gemischen technischer Gase anfällt.

3. Verfahren nach einem der Ansprüche 1 oder 2, **dadurch gekennzeichnet, dass** das Trocknungsgas durch anfallende Prozessabwärme oder durch anfallende Abwärme aus Verdichtungsprozessen erwärmt wird.

4. Verfahren nach einem der Ansprüche 1 bis 4, **dadurch gekennzeichnet, dass** das Trocknungsgas in dem Trocknungsgut Fäulnis, Biofilmbildung und/oder Schädlingsbefall verhindert sowie brandhemmend wirkt.

5. Verfahren nach einem der Ansprüche 1 bis 4, **dadurch gekennzeichnet, dass** das Trocknungsgas an mehreren Einspeisepunkten mit unterschiedlicher Temperatur und/oder unterschiedlichem Volumenstrom in das Trocknungsgut eingebracht wird.

6. Verfahren nach einem der Ansprüche 1 bis 5, **dadurch gekennzeichnet, dass** das Trocknungsgas durch eine Schüttung gelagerten Trocknungsgutes geleitet wird.

7. Verfahren nach einem der Ansprüche 1 bis 6, **dadurch gekennzeichnet, dass** der Kontakt des Trocknungsgases und des Trocknungsgutes im Gleichstrom, wobei das Trocknungsgas schneller als das Trocknungsgut fließt, oder im Gegenstrom oder im Kreuzstrom erfolgt.

8. Verfahren nach einem der Ansprüche 1 bis 7, **dadurch gekennzeichnet, dass** das Trocknungsgut ausgewählt ist aus Brennmaterial, Futtermitteln, Nahrungsmitteln, Klärschlamm, Hausmüll, Braunkohle, Torf, Gärrückständen, Fermentationsrückständen, Kompost und/oder aus Biomasse hergestellten Produkten.

9. Verfahren nach einem der Ansprüche 1 bis 8, **dadurch gekennzeichnet, dass** die Trocknung während der Lagerung des Trocknungsgutes erfolgt.

10. Verfahren nach einem der Ansprüche 1 bis 9, **dadurch gekennzeichnet, dass** das Trocknungsgut stückig ausgebildet ist und die Stückigkeit des Trocknungsgutes durch einen mechanischen Zerkleinerungsschritt erzeugt wurde.

## Claims

1. Method for drying biomass-containing substances, whereby a gas mixture as a drying gas is brought into contact with the moist, biomass-containing substances as a material to be dried, wherein the material to be dried is stored in form of a heap opening out towards the atmosphere or in a silo opening out towards the atmosphere,
and the drying gas is fed into the heap or the silo in such a way that it flows through the material to be dried on the way into the atmosphere, wherein the inflowing drying gas contains CO₂ and N₂ and comprises an O₂ percentage of a maximum of 20.5 Vol.-% with regard to the drying gas calculated anhydrous, wherein the drying gas comprises a CO₂ content of at least 0.5 Vol.-%, **characterized in that** the used drying gas and/or the components added to it, comprises a water content of less than 2 g H₂O/m³ (at standard conditions) or of less than 0.2 g H₂O/m³ (at standard conditions).

2. Method according to claim 1, **characterized in that** the drying gas or at least one component of the drying gas accrues as a by-product, co-product or final product of procedural processes for producing or cleaning or processing technical gases or mixtures of technical gases.

3. Method according to one of the claims 1 or 2, **characterized in that** the drying gas is heated by accruing waste process heat or by waste heat accruing in compression processes.

4. Method according to one of the claims 1 to 4, **characterized in that** the drying gas prevents rot, biofilm formation and/or pest infestation in the material to be dried and acts flame-retardant.

5. Method according to one of the claims 1 to 4, **characterized in that** the drying gas is introduced to the material to be dried on several feeding points with differing temperature and/or differing volume rate.

6. Method according to one of the claims 1 to 5, **characterized in that** the drying gas is conducted through a fill of stored material to be dried.

7. Method according to one of the claims 1 to 6, **characterized in that** the contact of the drying gas and the material to be dried takes place in parallel flow, wherein the drying gas flows faster than material to be dried, or in counter flow or in cross flow.

8. Method according to one of the claims 1 to 7, **characterized in that** the material to be dried is selected from fuel, feeds, food, sewage sludge, household waste, brown coal, turf, digestates, fermentation residues, compost and/or products made of biomass.

9. Method according to one of the claims 1 to 8, **characterized in that** the drying takes place during the storage of the material to be dried.

10. Method according to one of the claims 1 to 9, **characterized in that** the material to be dried is formed in pieces and the fragmentation of the material to be dried was caused by a mechanical comminution step.

## Revendications

1. Procédé pour le séchage de substances contenant de la biomasse, un mélange gazeux en qualité de gaz de séchage étant mis en contact aux substances humides contenant de la biomasse en qualité de matière à sécher, la matière à sécher étant stocké en forme d'un amoncellement ouvert vers l'atmosphère ou dans un silo ouvert vers l'atmosphère,
et le gaz de séchage étant introduit dans l'amoncellement ou dans le silo de sorte qu'à destination de l'atmosphère il coule à travers la matière à sécher, le gaz de séchage introduit comportant du CO₂ et du N₂ et une proportion de O₂ de 20,5 %vol, calculé en relation au gaz de séchage anhydre, le gaz de séchage comportant une proportion de CO₂ d'au moins 0,5 %vol, **caractérisé en ce que** le gaz de séchage utilisé et / ou les composants ajoutés à celui-ci comportent une teneur en eau inférieure à 2 g H₂O / m³ (sous les conditions normales), ou inférieure à 0,2 g H₂O / m³ (sous les conditions normales).

2. Procédé selon la revendication 1, **caractérisé en ce que** le gaz de séchage ou au moins un composant du gaz de séchage est créé comme sous-produit, coproduit ou produit final dans les processus techniques de la production ou la purification ou le traitement des gaz industriels ou des mélanges de gaz industriels.

3. Procédé selon l'une des revendications 1 ou 2, **caractérisé en ce que** le gaz de séchage est échauffé par la chaleur perdue produit au cours du processus ou par la chaleur perdue produit au cours des processus de compression.

4. Procédé selon l'une des revendications 1 à 4, **caractérisé en ce que** le gaz de séchage prévient dans la matière à sécher la putréfaction, la formation du biofilm et / ou l'infestation parasitaire ainsi que provoque un effet ignifuge.

5. Procédé selon l'une des revendications 1 à 4, **caractérisé en ce que** le gaz de séchage est introduit dans la matière à sécher à travers de plusieurs points d'entrée de température différente et / ou de flux volumique différent.

6. Procédé selon l'une des revendications 1 à 5, **caractérisé en ce que** le gaz de séchage est conduit au travers d'un amoncellement de matière à sécher stockée.

7. Procédé selon l'une des revendications 1 à 6, **caractérisé en ce que** le contact du gaz de séchage et la matière à sécher est réalisé à co-courant, le gaz de séchage coulant plus rapidement que la matière à sécher, ou à contre-courant ou à courants croisés.

8. Procédé selon l'une des revendications 1 à 7, **caractérisé en ce que** la matière à sécher est sélectionnée entre les matières combustibles, le fourrage, les aliments, les boues d'épuration, les déchets domestiques, le lignite, la tourbe, les digestats, les résidus de fermentation, le compost et / ou les produits faits de biomasse.

9. Procédé selon l'une des revendications 1 à 8, **caractérisé en ce que** le séchage est réalisé pendant le stockage de la matière à sécher.

10. Procédé selon l'une des revendications 1 à 9, **caractérisé en ce que** la matière à sécher est formée en morceaux, et la fragmentation de la matière à sécher a été réalisée par une étape de broyage mécanique.
